# EUROPÄISCHE PATENTANMELDUNG

(11) **EP 2 409 878 A1**
(43) Veröffentlichungstag der Anmeldung: **25.01.2012**
(21) Anmeldenummer: 11001559.1
(22) Anmeldetag: 25.02.2011
(51) Int. Cl.: B60P 1/44

(54) **Hecktragvorrichtung für ein Fahrzeug mit einem Fahrzeugaufbau und Fahrzeug mit einer derartigen Hecktragvorrichtung**

(30) Priorität: 22.07.2010 DE 202010010537 U
(71) Anmelder: DAUTEL GMBH, 74211 Leingarten (DE)
(72) Erfinder: Schönberger, Klaus, 74078 Heilbronn (DE)
(74) Vertreter: Clemens, Gerhard

(57) **Zusammenfassung**

Eine Hecktragvorrichtung (10) für ein Fahrzeug, insbesondere Lastkraftwagen, mit einem Fahrzeugrahmenchassis (26), einem Fahrzeugaufbau (12), insbesondere einem festen Aufbau oder einem Wechselaufbau, einer Tiefkupplung (16) und einer unterfahrbaren Ladebordwandeinrichtung (14), gekennzeichnet dadurch, dass die Hecktragvorrichtung (10) als integrale selbsttragende Vorrichtung ausgebildet ist, die Hecktragvorrichtung (10) über eine erste Anschlussschnittstelleneinrichtung (18) an das Fahrzeugrahmenchassis (26) anschließbar ist, an die Hecktragvorrichtung (10) über eine zweite Anschlussschnittstelleneinrichtung (20) eine Tiefkupplung (16) angeschlossen ist, an die Hecktragvorrichtung (10) über eine dritte Anschlussschnittstelleneinrichtung (22) eine unterfahrbare Ladebordwandeinrichtung (14) angeschlossen ist und an der Hecktragvorrichtung (10) oberseitig eine vierte Anschlussschnittstelleneinrichtung (24) zum hinterseitigen Anschluss des Fahrzeugaufbaus vorhanden ist.

## Beschreibung

### TECHNISCHES GEBIET

Die vorliegende Erfindung betrifft eine Tragvorrichtung für ein Fahrzeug, insbesondere Lastkraftwagen, mit einem Fahrzeugrahmenchassis, einem Fahrzeugaufbau, der als fester Aufbau oder als Wechselaufbau ausgebildet sein kann, einer Tiefkupplung und einer unterfahrbaren Ladebordwandeinrichtung. Die vorliegende Erfindung betrifft auch ein Fahrzeug, insbesondere Lastkraftwagen mit einer Hecktragvorrichtung.

### STAND DER TECHNIK

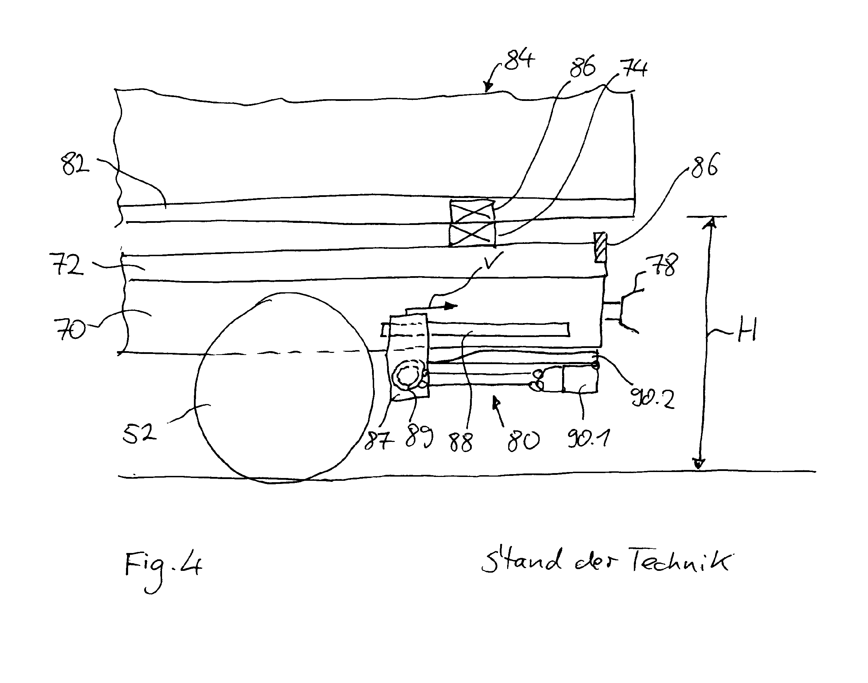

In Fig. 4 ist der Heckbereich eines bekannten Fahrzeuges stark schematisiert dargestellt. Das Chassis 70 des Fahrzeuges ragt über das Hinterrad 52 des Fahrzeuges hinaus und oberseitig kann am Chassis 70 ein Hilfsrahmen 72 angeschlossen sein. An dem Hilfsrahmen 72 oder dem Chassis ist in Querrichtung ein Wechselquerträger 74 angeschlossen, der oberseitig eine Aufnahme 86 eines Wechselaufbaus 84 aufweist. Eine Beleuchtung 86 ist im Bereich der hinteren Fahrzeugstirnseite vorhanden. Am Chassis 70 ist eine Kupplung 78 angeschlossen. Im hinteren Endbereich des Chassis 70 ist unterseitig eine stark schematisierte unterfahrbare Ladebordwand 80 mit klappbaren Plattformeinheiten 90.1, 90.2 angeschlossen, die über zwei beabstandete Laschen 87 mit Schlittenprofil an einer Profilschiene 88 längsverschieblich am Chassis 70 gelagert ist und über Kolbenzylinderaggregate oder Ölmotoren und Gelenkmechanismen ausgefahren, aufgeklappt und zu Be- und Entladezwecken verschwenkt werden kann. Der Gelenkmechanismus ist einerseits an einer Plattformeinheit 90.1 und andererseits an einem Tragrohr 89 angeschlossen, wobei das Tragrohr 89 beidseitig an den Laschen 87 angeschlossen ist. Der Wechselaufbau 84 ist ein Standardwechselaufbau C 7, 15 m / C 7, 82 m / C 7, 45 m lang. Die Oberkante des Wechselrahmens (Wechselquerträger 74 oder beim Festaufbau das Chassis), beträgt > 900 mm in Fahrstellung. Ein derartiges Fahrzeug mit einem Aufbau 84 wird hauptsächlich im Regional- beziehungsweise Distributionsverkehr eingesetzt. Der Aufbau und die Funktionsweise einer bekannten unterfahrbaren Ladebordwand 80 ist beispielsweise in der Veröffentlichung "DAUTEL SLIDER, der neue Maßstab DS-VA-VB", Ausgabe 01/2009 offenbart.

Um das Transportvolumen zu maximieren werden insbesondere im Fernverkehr heute XXL-Volumenaufbauten (Wechselaufbau oder Festaufbau) eingesetzt. Da die Gesamthöhe des Fahrzeuges durch gesetzliche Vorgaben beschränkt ist, muss beim Verwenden von XXL-Volumenaufbauten ein Fahrzeug eingesetzt werden, dass eine geringere Höhe des Wechselrahmens oder Chassis beim Festaufbau in Fahrstellung aufweist, dass heißt die Oberkante des Rahmens gegenüber dem oben beschriebenen Fahrzeug deutlich nach unten versetzt vorhanden ist. Als Kupplung wird eine so genannte Tiefkupplung eingesetzt, um über eine unter dem Chassis liegende Zugdeichsel einen Anhänger anschließen zu können. Konstruktiv besteht nun keine Möglichkeit mehr, eine unterfahrbare Ladebordwand anzuschließen.

Ein Fahrzeug mit einem festen XXL-Volumenfahrzeugaufbau oder einem XXL-Volumenwechselaufbau bei einer Höhe Oberkante vom Wechselrahmen oder Chassis (Festaufbau) in Fahrstellung ≤ 900 mm vorzugweise 860 mm in Verbindung mit einer Tiefkupplung und einer unterfahrbaren Ladebordwand ist nicht bekannt.

### DARSTELLUNG DER ERFINDUNG

Ausgehend von dem genannten Stand der Technik liegt der vorliegenden Erfindung das technische Problem beziehungsweise die Aufgabe zugrunde, eine Hecktragvorrichtung für ein Fahrzeug anzugeben, die den Einsatz einer unterfahrbaren Ladebordwandeinrichtung unter einem festen Aufbau oder Wechselaufbau mit Tiefkupplung ermöglicht. Darüber hinaus soll trotz dem Vorhandensein einer Ladebordwandeinrichtung eine Höhe Oberkante vom Wechselrahmen oder Chassis (Festaufbau) in Fahrstellung von ≤ 900 mm vorzugsweise 860 mm nicht überschritten werden. Weiterhin liegt der vorliegenden Erfindung das technische Problem beziehungsweise die Aufgabe zugrunde, eine Tragvorrichtung anzugeben, die konstruktiv einfach ausgebildet ist, wirtschaftlich herstellbar und montierbar ist sowie eine dauerhaft zuverlässige Funktion gewährleistet.

Die erfindungsgemäße Hecktragvorrichtung der eingangs genannten Art ist durch die Merkmale des unabhängigen Anspruchs 1 gegeben. Vorteilhafte Ausgestaltungen und Weiterbildungen sind Gegenstand von dem unabhängigen Anspruch 1 direkt oder indirekt abhängigen Ansprüche.

Die erfindungsgemäße Hecktragvorrichtung zeichnet sich demgemäß dadurch aus, dass die Hecktragvorrichtung als integrale selbsttragende Vorrichtung ausgebildet ist, die Hecktragvorrichtung über eine erste Anschlussschnittstelleneinrichtung an das Fahrzeugrahmenchassis anschließbar ist, an die Hecktragvorrichtung über eine zweite Anschlussschnittstelleneinrichtung eine Tiefkupplung angeschlossen ist, an die Hecktragvorrichtung über eine dritte Anschlussschnittstelleneinrichtung eine unterfahrbare Ladebordwandeinrichtung angeschlossen ist und an der Hecktragvorrichtung oberseitig eine vierte Anschlussschnittstelleneinrichtung zum hinterseitigen Anschluss eines Fahrzeugaufbaus vorhanden ist.

Eine konstruktiv besonders vorteilhafte Ausgestaltung zeichnet sich dadurch aus, dass die erste und zweite Anschlussschnittstelleneinrichtung als geschraubte oder geschweißte Verbindung, insbesondere unter Zwischenschaltung von Laschen, ausgebildet ist.

Zum Anschluss der unterfahrbaren Ladebordwandeinrichtung zeichnet sich eine besonders vorteilhafte Weiterbildung der erfindungsgemäßen Hecktragvorrichtung dadurch aus, dass die dritte Anschlussschnittstelleneinrichtung zwei in Fahrtrichtung parallel beabstandete Schienenprofileinheiten aufweist, die an die Hecktragvorrichtung angeschlossen sind und an die jeweils eine längsverschieblich gelagerte Lagerlasche mit einer Schlittenprofileinheit angeschlossen ist, an der ein Tragrohr für die Ladebordwandeinrichtung angeschlossen ist, wobei zwischen Tragrohr und Ladebordwandeinrichtung ein Gelenkmechanismus mit Hubschwingen und Kolbenzylinderaggregaten der Ladebordwandeinrichtung angeschlossen ist.

Eine hinsichtlich der Beleuchtung der Rückseite des Fahrzeuges besonders vorteilhafte Ausgestaltung zeichnet sich dadurch aus, dass die Ladebordwandeinrichtung als klappbare Ladebordwandeinrichtung ausgebildet ist mit einer ersten Ladeplattformeinheit und zumindest einer klappbar an der ersten Ladeplattformeinheit angeschlossenen zweiten Ladeplattformeinheit, wobei an der im eingefahrenen Zustand nach hinten weisenden Stirnfläche der ersten Ladeplattformeinheit Leuchteinheiten integriert vorhanden sind.

Eine kompakte und tragfeste Ausgestaltung zeichnet sich gemäß einer vorteilhaften Weiterbildung dadurch aus, dass die Hecktragvorrichtung eine Tragstruktur aufweist, die einen ersten im freien Endbereich angeordneten Bereich und einen an den ersten in Fahrtrichtung überlappend anschließenden zweiten Bereich aufweist, wobei die Tragglieder des ersten Bereiches gegenüber einzelnen Traggliedern des zweiten Bereichs eine geringere Querschnittshöhe aufweisen und die Plattform der Ladebordwandeinrichtung im eingefahrenen Zustand unterhalb des ersten Bereiches anliegend vorhanden ist.

Um den Einsatz der erfindungsgemäßen Hecktragvorrichtung bei unterschiedlichsten auf dem Markt angebotenen Fahrzeugtypen problemlos umsetzen zu können, zeichnet sich eine vorteilhafte Ausgestaltung dadurch aus, dass die Querschnittshöhe der Tragglieder der Tragstruktur im ersten Bereich im Bereich zwischen 80 bis 150 mm, insbesondere bei circa 100 mm, liegt, die Querschnittshöhe einzelner Tragglieder im zweiten Bereich im Bereich zwischen 200 bis 300 mm liegt, wobei die Oberkante des Wechselrahmens oder des Fahrzeugrahmenchassis in Fahrstellung zum Boden im Bereich von 800 bis 900 mm, insbesondere bei circa 860 mm, liegt.

Um den beengten Raumverhältnissen unterhalb der Hecktragvorrichtung in Bezug auf Funktionalität und Zugänglichkeit der Bauteile Rechnung zu tragen, zeichnet sich eine vorteilhafte Weiterbildung dadurch aus, dass das Tragrohr der Ladebordwandeinrichtung eine entgegen der Fahrtrichtung verlaufende Abkröpfung aufweist.

Bevorzugt ist die Tiefkupplung über Laschen an die Tragstruktur im zweiten Bereich angeschlossen, insbesondere angeschraubt.

Eine besonders kompakte und tragfeste vorteilhafte Ausgestaltung der erfindungsgemäßen Hecktragvorrichtung zeichnet sich dadurch aus, dass die Tragstruktur im ersten Bereich zwei parallel zur Fahrtrichtung beabstandet angeordnete erste Innentragprofile aufweist, jeweils ein nach außen hin parallel beabstandetes Außentragprofil aufweist, an dem die Schienenprofileinheit für die unterfahrbare Ladebordwandeinrichtung angeschlossen ist, im hinteren Endbereich des ersten Bereiches ein erstes Endquerträgerprofil und im gegenüberliegenden Endbereich ein zweites Endquerträgerprofil vorhanden ist, wobei das erste und zweite Endquerträgerprofil die ersten Innenprofile und die Außenprofile zu einem Rahmen verbinden und auf Höhe der Position der vierten Anschlussschnittstelleneinrichtungen für den Fahrzeugaufbau ein Innenquerträgerprofil vorhanden ist, das quer zur Fahrtlängsrichtung verläuft und die beiden außenseitig angeordneten vierten Anschlussschnittstelleneinrichtungen verbindet und im zweiten Bereich der Tragstruktur zwei senkrecht zur Fahrtrichtung beabstandet angeordnete zweite Innentragprofile angeordnet sind, die mit den ersten Innentragprofilen verbunden sind und die an das Fahrzeugrahmenchassis anschließbar sind.

Ein erfindungsgemäßes Fahrzeug, insbesondere Lastkraftwagen, mit einem Fahrzeugrahmenchassis und einem Fahrzeugaufbau zeichnet sich dadurch aus, dass der hintere Endbereich des Fahrzeugrahmenchassis abgeschnitten ist und anstelle des Fahrzeugrahmenchassis in diesem Bereich eine Hecktragvorrichtung nach einem oder mehreren der vorstehenden Ansprüche an das Fahrzeugrahmenchassis angeschlossen ist und an die Hecktragvorrichtung eine Tiefkupplung und eine unterfahrbare Ladebordwandeinrichtung angeschlossen ist und an der Hecktragvorrichtung der Fahrzeugaufbau, der als fester oder Wechselaufbau ausgebildet sein kann, in seinem hinteren Bereich gelagert ist.

Mit der neuen integralen, selbstragenden Hecktragvorrichtung ist es möglich, drei für das Fahrzeug wesentliche Komponenten in einem Bauteil zusammen zu fassen. Es ist eine unterfahrbare Ladebordwandeinrichtung, mit Heckbeleuchtung und gekröpften Tragrohr, hintere Befestigungspunkte für einen XXL-Volumenaufbau - fester Aufbau oder Wechselaufbau - und ein Anschluss der Aufhängekonstruktion für die unterfahrbare Ladebordwandeinrichtung vorhanden. Des Weiteren ist beispielsweise über einen Anhängebock die Tiefkupplung an der Hecktragvorrichtung angeschlossen. Die Trageinheit mit Ladebordwandeinrichtung und Tiefkupplung kann an 2-/3-Achsen-LKW montiert werden. Die Montage erfolgt einfach schraubbar an den LKW-Rahmen. Die Heckbeleuchtung ist in das Plattform-Festteil der Ladebordwandeinrichtung integriert vorhanden. Durch die geschraubten Anschlussschnittstelleneinrichtungen ist generell ein Nachrüsten oder Rückrüsten eines Lastkraftwagens möglich.

Bisher war es bei einer Höhe Oberkante Wechselrahmen oder Chassishöhe (Festaufbau) ≤ 900 mm vorzugsweise 860 mm in Fahrstellung in der Kombination mit einer Tiefkupplung nicht möglich, eine unterfahrbare Ladebordwandeinrichtung an einem LKW zu montieren. Dadurch waren die Aufbauhöhen und somit das Ladevolumen am LKW und Anhänger in Verbindung mit einer Ladebordwandeinrichtung begrenzt. Durch die erfindungsgemäße Hecktragvorrichtung ist es bei einer Höhe Oberkante Wechselrahmen oder Chassishöhe (Festaufbau) ≤ 900 mm vorzugsweise 860 mm in Fahrstellung eines 2/3-Achsen-LKW möglich, eine unterfahrbare Ladebordwandeinrichtung in Kombination mit einer Tiefkupplung und einem XXL-Volumenaufbau einzusetzen. Des Weiteren kann ein tiefgekuppelter Anhänger für maximale Aufbaulänge/-höhe und somit maximales Ladevolumen eingesetzt werden.

Durch die Verwendung des XXL-Volumenaufbaus ergeben sich gegenüber dem normalen Aufbau um circa 10 % bis 20 % höheres Ladevolumen. Im Regional- beziehungsweise Distributionsverkehr, wo häufig die Ladebordwandeinrichtung ein maßgeblich Argument ist, kann nunmehr aufgrund der erfindungsgemäßen Hecktragvorrichtung beispielsweise anstelle der üblichen Aufbauart, wie im Fernverkehr der XXL-Volumenaufbau, eingesetzt werden. Dadurch können Optimierungen und Synergien erzielt werden, da unter anderem nun auch weniger Fahrzeugtypen und Aufbauarten eingesetzt werden müssen.

Bei Einsatz derartiger Fahrzeuge mit XXL-Volumenaufbau können die Anzahl der Transporte reduziert werden, da ein höheres Transportvolumen zur Verfügung steht. Dies bedeutet auch eine Reduzierung der Mautgebühren. Es können Fahrzeuge mit XXL-Volumenaufbau auch im Regional- beziehungsweise Distributionsverkehr eingesetzt werden, was wirtschaftliche Vorteile mit sich bringt. Im Ergebnis werden auch die CO2-Emissionen reduziert. Das Be- und Entladen des LKWs kann so entweder mit der unterfahrbaren Ladebordwandeinrichtung, mit Stapler oder an Rampen oder Verladeschleusen erfolgen.

Mit der erfindungsgemäßen Hecktragvorrichtung kann in einem Bauteil eine unterfahrbare Ladebordwandeinrichtung, hintere Befestigungspunkte für XXL-Volumenaufbauten und ein Anhängebock für die Tiefkupplung zur Verfügung gestellt werden. Das Anschlagsystem für die Ladebordwandeinrichtung und die Rückbeleuchtung des LKWs sind in der Hecktragvorrichtung beziehungsweise Ladebordwandeinrichtung integriert vorhanden. Alle Schnittstellen sind bevorzugt schraubbar ausgebildet. Die erfindungsgemäße Hecktragvorrichtung ist montagegemäß geeignet für LKWs unterschiedlichster Herstelltypen.

Weitere Ausführungsformen und Vorteile der Erfindung ergeben sich durch die in den Ansprüchen ferner aufgeführten Merkmale sowie durch das nachstehend angegebene Ausführungsbeispiel. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand des in der Zeichnung dargestelltem Beispiels näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig.1: stark schematisierte Seitenansicht des Heckbereiches eines Fahrzeuges mit einer Hecktragvorrichtung mit einer angeschlossenen unterfahrbaren Ladebordwandeinrichtung, einer angeschlossenen Tiefkupplung und einem aufgesetzten XXL-Volumenwechselaufbau,
- Fig. 2: stark schematisierte Seitenansicht eines Lastkraftwagens mit der Darstellung des Heckbereiches als Detail A,
- Fig. 3: stark schematisierte Draufsicht auf die Hecktragvorrichtung gemäß Fig. 1, ohne Darstellung der Ladebordwandeinrichtung und
- Fig. 4: stark schematisierte Seitenansicht eines Heckbereiches eine Fahrzeuges mit Wechselaufbau, Kupplung und Ladebordwandeinrichtung gemäß dem Stand der Technik.

### WEGE ZUM AUSFÜHREN DER ERFINDUNG

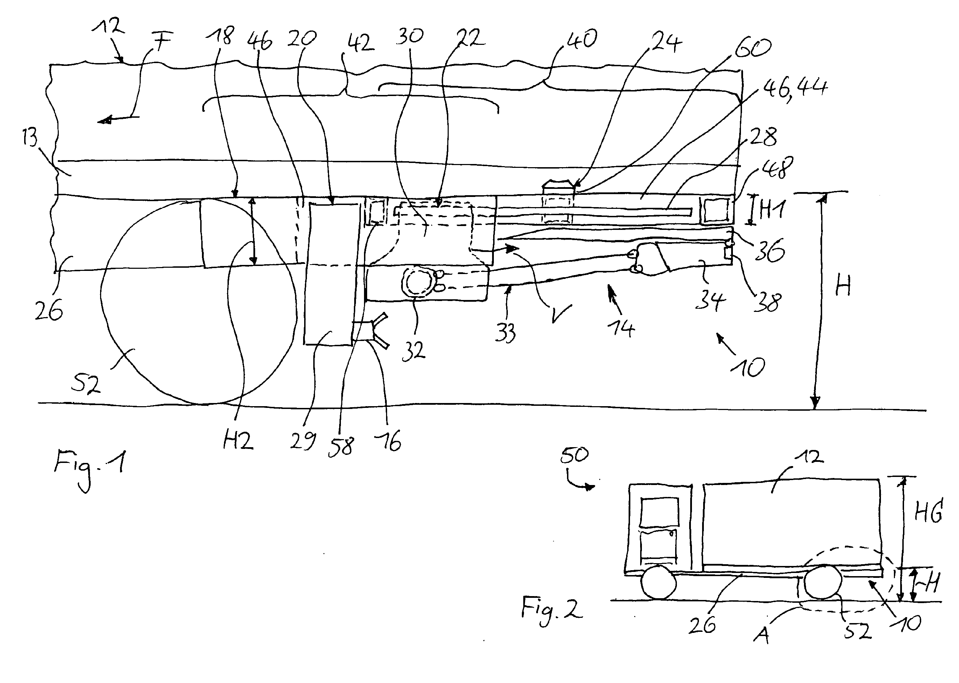

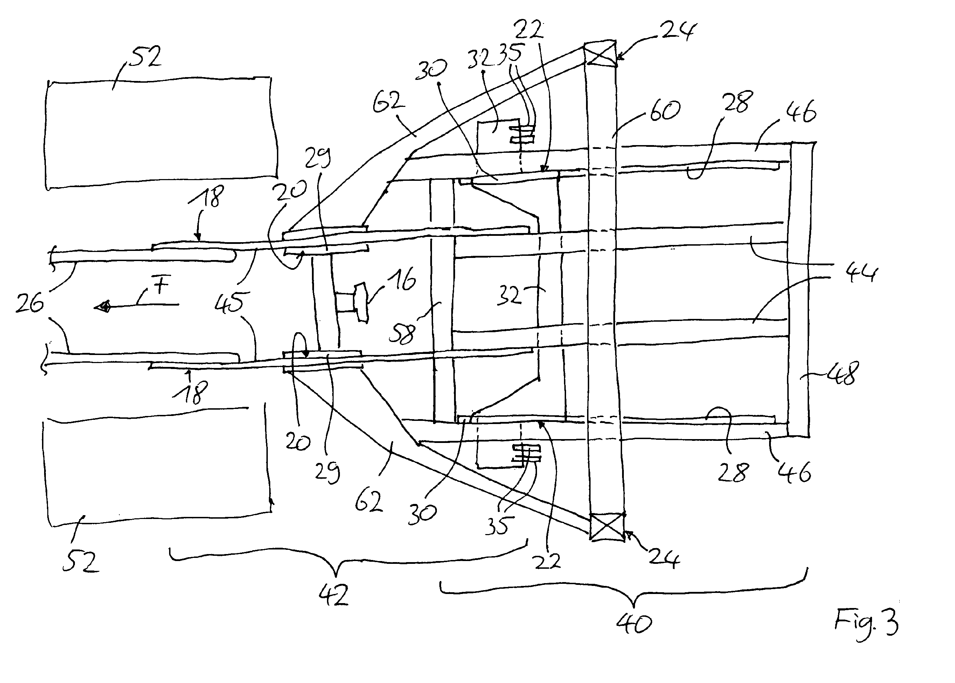

In Fig. 2 ist stark schematisiert ein Fahrzeug 50 dargestellt, mit einem Fahrzeugrahmenchassis 26, auf dem ein Wechselaufbau 12 angeordnet ist. Im Bereich des Hinterrades 52 des Fahrzeuges 50 ist das Detail A eingezeichnet, in dem eine Hecktragvorrichtung 10 angeordnet ist, wobei die Figuren 2 und 3 ein Ausführungsbeispiel einer derartigen Hecktragvorrichtung 10 zeigen.

Das in den Figuren dargestellte Ausführungsbeispiel bezieht sich auf ein Fahrzeug 50 mit einem Wechselaufbau 12. Grundsätzlich kann die Hecktragvorrichtung 10 auch bei einem Fahrzeug mit einem festen Fahrzeugaufbau angeschlossen werden.

Die Gesamthöhe des Fahrzeuges 50 ist aufgrund gesetzlicher Vorschriften beschränkt. Werden nun beispielsweise so genannte XXL-Volumenwechselaufbauten 12 oder feste XXL-Volumenaufbauten (nicht dargestellt) eingesetzt, die eine vergrößerte Querschnittshöhe aufweisen, so muss die Höhe H Oberkante vom Wechselrahmen oder Chassis (Festaufbau) auf ≤ 900 mm vorzugweise 860 mm in Fahrstellung vermindert werden. Dies hat zur Folge, dass bei den bekannten Lastkraftwagen in Verbindung mit Tiefkupplung keine unterfahrbare Ladebordwandeinrichtung eingesetzt werden kann.

Mit der erfindungsgemäßen Hecktragvorrichtung 10 ist dies möglich. Hierzu wird bei dem bekannten Standardfahrzeug das Chassis im Bereich des Hinterrades 52 abgeschnitten und durch die erfindungsgemäße Hecktragvorrichtung 10 ersetzt.

Die Hecktragvorrichtung 10 weist in Ihrem hinteren Endbereich einen ersten Bereich 40 einer Tragstruktur auf, an den in Fahrtrichtung ein zweiter Bereich 42 überlappend anschließt. Die Tragstruktur im ersten Bereich 40 besitzt eine verringerte Querschnittshöhe als die Tragstruktur im zweiten Bereich 42. Dadurch ist es möglich, unterhalb des ersten Bereiches 40 eine unterfahrbare Ladebordwandeinrichtung 14 anzuschließen. Im ersten Bereich 40 sind parallel zur Fahrtrichtung zwei beabstandet angeordnete Innentragprofile 44 vorhanden und parallel nach außen beabstandet jeweils ein Außentragprofil 46 angeordnet, wobei die Innentragprofile 44 und die Außentragprofile 46 im hinteren Endbereich über ein erstes Endquerträgerprofil 48 und im vorderen Endbereich über ein zweites Endquerträgerprofil 58 zu einem Rahmen verbunden sind. An die Außentragprofile 46 ist innenseitig eine Schienenprofileinheit 28 angeschlossen. Die ersten Innentragprofile 44 und die Außentragprofile 46 weisen im Ausführungsbeispiel eine Querschnittshöhe H1 von circa 100 mm auf.

In dem zweiten Bereich 42 der Tragstruktur sind zwei parallel zur Fahrtrichtung F beabstandet angeordnete zweite Innentragprofile 45 vorhanden, wobei im Überlappungsbereich die ersten Innentragprofile 44 jeweils an die zweiten Innentragprofile 45 angeschlossen, insbesondere angeschraubt sind.

In etwa der Mitte des ersten Bereichs 40 ist quer zur Fahrtrichtung F ein Innenquerträgerprofil 60 vorhanden, das nach außen über die Außentragprofile 46 hinausragt und jeweils in seinem Endbereich oberseitig eine vierte Anschlussschnittstelleneinrichtung 24 zur Aufnahme des Wechselaufbaus 12 in seinem hinteren Bereich vorhanden ist. Die vierte Anschlussschnittstelleneinrichtung 24 ist zusätzlich über jeweils ein nach vorn verlaufendes Diagonalprofil 62 jeweils an das zweite Innentragprofil 45 des zweiten Bereiches 42 der Tragstruktur außenseitig angeschlossen.

Im Bereich des Anschlusses des Diagonalträgerprofils 62 ist innenseitig eine zweite Anschlussschnittenstelleneinrichtung 20 vorhanden, an die jeweils eine nach unten weisende Anschlusslasche 29 angeschlossen ist, die einen Anhängebock für eine Tiefkupplung 16 bildet.

Im vorderen Endbereich der Hecktragvorrichtung 10 weisen die zweiten Innentragprofile 45 eine erste Anschlussschnittstelleneinrichtung 18 auf, über die die Hecktragvorrichtung 10 an das Fahrzeugrahmenchassis 26 angeschlossen wird. Die erste Anschlussschnittstelleneinrichtung 18 und die zweite Anschlussschnittstelleneinrichtung 20 sind bevorzugt geschraubt ausgebildet.

Die beidseitig vorhandene Schienenprofileinheit 28 in Verbindung mit jeweils einer Lagerlasche 30 bilden eine dritte Anschlussschnittstelleneinrichtung 22 mittels derer eine unterfahrbare Ladebordwandeinrichtung 14 angeschlossen ist. An die Lagerlaschen 30 ist jeweils ein nach außen überragendes Tragrohr 32, das im Bereich zwischen den Lagerlaschen 30 eine entgegen der Fahrtrichtung verlaufende Abkröpfung besitzt, angeschlossen, insbesondere angeschweißt. Die Lagerlasche 30 besitzt oberseitig ein Schlittenprofil, das an der Schienenprofileinheit 28 längsverschieblich V gelagert ist. An dem Tragrohr 32 als Bestandteil der unterfahrbaren Ladebordwandeinrichtung 14 sind im nach außen überstehenden Bereich Anschlusslaschen 35 zum Anschluss eines Gelenkmechanismus, bestehend aus Hubschwingen und Kolbenzylinderaggregaten, vorhanden. Der Gelenkmechanismus 33 ist in Fig. 1 schematisch und in Fig. 3 nicht dargestellt. In seinem entgegen der Fahrtrichtung F weisenden Endbereich ist der Gelenkmechanismus 33 an eine erste Ladeplattformeinheit 34 angeschlossen, wobei an die erste Ladeplattformeinheit 34 über ein Gelenk eine klappbare zweite Ladeplattformeinheit 36 angeschlossen ist. Die zweite Ladeplattformeinheit 36 kann auf die erste Ladeplattformeinheit 34 geklappt werden, welcher Zustand in Fig. 1 dargestellt ist. Durch die Wirkung zumindest eines Kolbenzylinderaggregates wird die zweite Ladeplattformeinheit 36 der Ladebordwandeinrichtung 14 im unterfahrenden Zustand gemäß Fig. 1 gegen die Unterseite der Tragstruktur im ersten Bereich 40 gedrückt.

In der nach hinten weisenden Stirnseite der ersten Ladeplattformeinheit 34, die im unterfahrenen Zustand sichtbar ist, ist eine Leuchteinheit 38 integriert vorhanden.

Die Höhe H1 der Tragstruktur im ersten Bereich 40 liegt bei circa 100 mm. Die Höhe H2 der Tragstruktur im zweiten Bereich 42 liegt bei circa 250 mm.

Im unterfahrenen Bereich ist die Lagerlasche 30 mit dem Tragrohr 32 im linken Endbereich des ersten Bereiches 40 der Tragstruktur angeordnet. Zur Nutzung der Ladeplattformeinheiten 34, 36 werden diese zunächst geringfügig abgesenkt und entgegen der Fahrtrichtung (Pfeil V) verschoben. Hierbei gleitet der Schlitten der Lagerlasche 30 an der Schienenprofileinheit 28 entlang. Gleichzeitig werden die Ladeplattformeinheiten 34, 36 nach unten abgesenkt. In diesem Zustand kann die zweite Ladeplattformeinheit 36 umgeklappt werden, so dass sie zusammen mit der ersten Ladeplattformeinheit 34 eine Ladefläche bildet. Danach kann die Ladebordwandeinrichtung 14 zum Be- und Entladen eingesetzt werden, indem über eine Steuereinrichtung die Kolbenzylinderaggregate angesteuert werden, um die Ladeplattformeinheiten anzuheben, abzusenken oder zu neigen. Die Funktionsweise einer derartigen bekannten unterfahrbaren Ladebordwandeinrichtung 14 ist in der Veröffentlichung "DAUTEL SLIDER, der neue Maßstab DS-VA-VB", Ausgabe 01 /2009 beschrieben.

Die Anschlusslaschen 29 für den Anschluss der Tiefkupplung 16 und der zweiten Innentragprofile 45 sind unmittelbar vor den Lagerlaschen 30 für den Anschluss der Ladebordwandeinrichtung im unterfahrenen Zustand und der Außentragprofile 46 vorhanden. Die Tiefkupplung 16 ist dabei höhenmäßig unterhalb des Niveaus der Lagerlaschen 30 angeordnet, so dass eine Zugdeichsel für einen Anhänger problemlos angeschlossen werden kann, ohne dass es zu Kollisionen mit der Ladebordwandeinrichtung 14 kommt.

Mit der integrierten, selbsttragenden Hecktragvorrichtung 10 wird ein Bauteil zur Verfügung gestellt, bei dem XXL-Volumenaufbauten 12, insbesondere feste oder Wechselaufbauten, verwendet werden können, gleichzeitig eine unterfahrbare Ladebordwandeinrichtung und eine Tiefkupplung vorhanden ist. Diese Kombination ist bei den bekannten Lastkraftfahrzeugen nicht möglich. Durch die bevorzugte geschraubte Ausbildung der Anschlussschnittstelleneinrichtungen 18, 20, 22 ist eine einfache und wirtschaftliche Montage möglich. Darüber hinaus ist ein Nach- und Rückrüsten eines Fahrzeugs ebenfalls problemlos möglich. Im Ergebnis wird durch die erfindungsgemäße Hecktragvorrichtung 10 ermöglicht, dass Lastkraftwagen mit XXL-Volumenaufbau auch im Regional- beziehungsweise Distributionsverkehr, bei dem eine Ladebordwandeinrichtung benötigt wird, eingesetzt werden kann, was wirtschaftliche Vorteile mit sich bringt.

## Patentansprüche

1. Hecktragvorrichtung (10) für ein Fahrzeug (50), insbesondere Lastkraftwagen, mit einem Fahrzeugrahmenchassis (26), einem Fahrzeugaufbau (12), insbesondere einem festen Aufbau oder einem Wechselaufbau, einer Tiefkupplung (16) und einer unterfahrbaren Ladebordwandeinrichtung (14),
- **dadurch gekennzeichnet, dass**
- die Hecktragvorrichtung (10) als integrale selbsttragende Vorrichtung ausgebildet ist,
- die Hecktragvorrichtung (10) über eine erste Anschlussschnittstelleneinrichtung (18) an das Fahrzeugrahmenchassis (26) anschließbar ist,
- an die Hecktragvorrichtung (10) über eine zweite Anschlussschnittstelleneinrichtung (20) eine Tiefkupplung (16) angeschlossen ist,
- an die Hecktragvorrichtung (10) über eine dritte Anschlussschnittstelleneinrichtung (22) eine unterfahrbare Ladebordwandeinrichtung (14) angeschlossen ist und
- an der Hecktragvorrichtung (10) oberseitig eine vierte Anschlussschnittstelleneinrichtung (24) zum hinterseitigen Anschluss des Fahrzeugaufbaus vorhanden ist.

2. Hecktragvorrichtung nach Anspruch 1,
- **dadurch gekennzeichnet, dass**
- die erste und zweite Anschlussschnittstelleneinrichtung (18, 20) als geschraubte oder geschweißte Verbindung, insbesondere unter Zwischenschaltung von Laschen, ausgebildet ist.

3. Hecktragvorrichtung nach Anspruch 1,
- **dadurch gekennzeichnet, dass**
- die dritte Anschlussschnittstelleneinrichtung (22) zwei in Fahrtrichtung (F) parallel beabstandete Schienenprofileinheiten (28) aufweist, die an die Hecktragvorrichtung (10) angeschlossen sind und an die jeweils eine längsverschieblich gelagerte Lagerlasche (30) mit einer Schlittenprofileinheit angeschlossen ist, an der ein, insbesondere mehrteiliger, Tragkörper (32) für die Ladebordwandeinrichtung (14) angeschlossen ist, wobei zwischen dem, insbesondere mehrteiligen, Tragkörper (32) und der Ladebordwandeinrichtung (14) ein Gelenkmechanismus mit Hubschwingen und Kolbenzylinderaggregaten der Ladebordwandeinrichtung (14) angeschlossen ist.

4. Hecktragvorrichtung nach einem oder mehreren der vorstehenden Ansprüche,
- **dadurch gekennzeichnet, dass**
- die Ladebordwandeinrichtung (14) als klappbare Ladebordwandeinrichtung ausgebildet ist mit einer ersten Ladeplattformeinheit (34) und zumindest einer klappbar an der ersten Ladeplattformeinheit (34) angeschlossenen zweiten Ladeplattformeinheit (36), wobei an der im eingefahrenen Zustand nach hinten weisenden Stirnfläche der ersten Ladeplattformeinheit (34) Leuchteinheiten (38) integriert vorhanden sind.

5. Hecktragvorrichtung nach einem oder mehreren der vorstehenden Ansprüche,
- **dadurch gekennzeichnet, dass**
- die Hecktragvorrichtung (10) eine Tragstruktur aufweist, die einen ersten im freien Endbereich angeordneten Bereich (40) und einen an den ersten in Fahrtrichtung (F) überlappend anschließenden zweiten Bereich (42) aufweist, wobei die Tragglieder des ersten Bereiches (40) gegenüber einzelnen Traggliedern des zweiten Bereichs (42) eine geringere Querschnittshöhe aufweisen und die Plattform der Ladebordwand (14) im eingefahrenen Zustand unterhalb des ersten Bereiches (40) anliegend vorhanden ist.

6. Hecktragvorrichtung nach Anspruch 5,
- **dadurch gekennzeichnet, dass**
- die Querschnittshöhe der Tragglieder der Tragstruktur im ersten Bereich (40) im Bereich zwischen 80 bis 150 mm (Millimeter), insbesondere bei circa 100 mm (Millimeter), liegt, die Querschnittshöhe einzelner Tragglieder im zweiten Bereich (42) im Bereich zwischen 200 bis 300 mm (Millimeter) liegt, wobei die Oberkante des Fahrzeugrahmenchassis beziehungsweise des Wechselrahmens (26) zum Boden im Bereich von 800 bis 900 mm (Millimeter), insbesondere bei circa 860 mm (Millimeter), liegt.

7. Hecktragvorrichtung nach einem oder mehreren der vorstehenden Ansprüche,
- **dadurch gekennzeichnet, dass**
- der, insbesondere mehrteilige, Tragkörper (32) der Ladebordwandeinrichtung (14) eine entgegen der Fahrtrichtung (F) verlaufende Abkröpfung aufweist.

8. Hecktragvorrichtung nach einem oder mehreren der vorstehenden Ansprüche,
- **dadurch gekennzeichnet, dass**
- die Tiefkupplung (16) über Laschen an die Tragstruktur im zweiten Bereich (42) angeschlossen, insbesondere angeschraubt, ist.

9. Hecktragvorrichtung nach einem oder mehreren der Ansprüche 5 bis 8,
- **dadurch gekennzeichnet, dass**
- die Tragstruktur im ersten Bereich (40) zwei parallel zur Fahrtrichtung (F) beabstandet angeordnete erste Innentragprofile (44) aufweist, jeweils ein nach außen hin parallel beabstandetes Außentragprofil (46) aufweist, an dem die Schienenprofileinheit (28) für die unterfahrbare Ladebordwand (14) angeschlossen ist, im hinteren Endbereich des ersten Bereiches (40) ein erstes Endquerträgerprofil (48) und im gegenüberliegenden Endbereich ein zweites Endquerträgerprofil (58) vorhanden ist, wobei das erste und zweite Endquerträgerprofil (48, 58) die ersten Innenprofile (44) und die Außenprofile (46) zu einem Rahmen verbinden und auf Höhe der Position der vierten Anschlussschnittstelleneinrichtungen (24) für den Fahrzeugaufbau (12) ein Innenquerträgerprofil (60) vorhanden ist, das quer zur Fahrtlängsrichtung (F) verläuft und die beiden außenseitig angeordneten vierten Anschlussschnittstelleneinrichtungen (24) verbindet und im zweiten Bereich (42) der Tragstruktur zwei senkrecht zur Fahrtrichtung (F) beabstandet angeordnete zweite Innentragprofile (36) angeordnet sind, die mit den ersten Innentragprofilen (34) verbunden sind und die an das Fahrzeugrahmenchassis (26) anschließbar sind.

10. Fahrzeug, insbesondere Lastkraftwagen, mit einem Fahrzeugrahmenchassis (26) und einem Fahrzeugaufbau (12),
- **dadurch gekennzeichnet, dass**
- der hintere Endbereich des Fahrzeugrahmenchassis (26) abgeschnitten ist und anstelle des Fahrzeugrahmenchassis (26) in diesem Bereich eine Hecktragvorrichtung (10) nach einem oder mehreren der vorstehenden Ansprüche an das Fahrzeugrahmenchassis (26) angeschlossen ist und an die Hecktragvorrichtung (10) eine Tiefkupplung (16) und eine unterfahrbare Ladebordwandeinrichtung (14) angeschlossen ist und an der Hecktragvorrichtung (10) der Fahrzeugaufbau (12) in seinem hinteren Bereich gelagert ist.
